# EUROPEAN PATENT SPECIFICATION

(11) **EP 4 275 987 B1**
(45) Date of publication and mention of the grant of the patent: **28.05.2025**
(21) Application number: 21917230.1
(22) Date of filing: 02.12.2021
(51) Int. Cl.: B61F 5/52, B61H 7/08

(54) **BOGIE COMPRISING A FRAMEWORK**
DREHGESTELL UMFASSEND EINEN RAHMEN
BOGIE COMPRENANT UNE OSSATURE

(30) Priority: 06.01.2021 CN 202110012868
(43) Date of publication of application: 15.11.2023
(73) Proprietor: CRRC Qingdao Sifang Co., Ltd., Qingdao, Shandong 266111 (CN)
(72) Inventor: CAO, Qingda, Qingdao, Shandong 266111 (CN); YANG, Weidong, Qingdao, Shandong 266111 (CN); CAO, Hongyong, Qingdao, Shandong 266111 (CN); ZHOU, Junfeng, Qingdao, Shandong 266111 (CN); LV, Jianfa, Qingdao, Shandong 266111 (CN)
(74) Representative: Prinz & Partner mbB
(86) International application number: PCT/CN2021/134918
(87) International publication number: WO 2022/148189

(56) References cited:
- EP-A1- 0 646 512
- EP-A1- 1 415 884
- EP-A2- 1 145 929
- WO-A1-2020/015616
- WO-A1-2020/151230
- CN-A- 103 935 379
- CN-A- 104 590 304
- CN-A- 107 628 049
- CN-A- 108 725 495
- CN-A- 112 660 191
- CN-U- 206 664 598
- CN-U- 209 700 677

## Description

The present application claims priority to Chinese Patent Application No. 202110012868.3, titled "FRAMEWORK OF BOGIE AND BOGIE", filed on January 6, 2021 with the China National Intellectual Property Administration.

### FIELD

The present application relates to the technical field of rail vehicles, and in particular to a bogie comprising a magnet track braking device and a framework.

### BACKGROUND

A bogie includes a cross beam, a longitudinal beam and a magnet track braking device. In the conventional technology, a blocking structure is arranged on a side beam to provide braking force for the magnet track braking device. The blocking structure extends laterally along the side beam, a torque is easy to be produced when the blocking structure blocks the magnet track braking device, and the strength requirement for the blocking structure is relatively high. At the same time, a positioning structure is required to be arranged to limit the movement of the magnet track braking device in the height direction, so as to prevent the magnet track braking device from shifting, and the overall structure is relatively complicated.

Therefore, how to simplify the overall structure of the bogie and ensure the blocking and the limit of the magnet track braking device are technical problems to be solved by those skilled in the art.

EP 1 145 929 A2 shows the operation unit has at least one operation element to move a brake mounted on the vehicle bogie between braked and rest positions. The operation unit has an operation cylinder on each side of the bogie and a spring unit with two springs. The spring unit holds the brake at a given minimum distance to the upper edge of the rail in the rest position. Centering devices hold the brake in the rest position without play. An Independent claim is included for a method to move a railway vehicle brake from a rest to a braked position.

CN 209 700 677 U shows a framework and a tramcar bogie. The framework comprises longitudinal beams and cross beams, the two longitudinal beams are arranged at the left ends and the right ends of the two cross beams, and the ends of the two longitudinal beams extend out relative to the front cross beam and the rear cross beam. The middle part of the longitudinal beam is recessed downwards relative to the front end and the rear end to form a recessed part; and the top surface of the recessed part of the longitudinal beam and the top surface of the cross beam are integrally positioned on the same plane. The bogie can effectively improve tramcar small curve passing capacity and system damping performance.

WO 2020/015616 A1 shows a light rail vehicle bogie, comprising a frame. The frame comprises side beams and cross beams, the middle of the side beam is sunken, the top of the cross beam is provided with a swing bolster, the cross beam consists of two pipe bodies, and two ends of each pipe body are both provided with a connecting base, and the two ends of the pipe bodies are fixedly connected to the side beams by means of the connecting bases; cantilever bases extending towards the inner side are provided on two shaft boxes of the light rail vehicle bogie, and a magnetic rail brake located directly below the pipe bodies is mounted in a hoisted manner on the two cantilever bases; the top of the magnetic rail brake is provided with a vertical guide rod, one side of each connecting base is mounted with limiting bases directly above two ends of the magnetic rail brake, and a guide hole for the insertion of the vertical guide rod is formed in the limiting base. The bogie implements low-level traction of the light rail vehicle and the cross beam space is optimized.

### SUMMARY

The object of the present application is to provide a bogie, which simplifies the overall structure of the bogie and ensure the blocking and the limit of the magnet track braking device.

The problem is solved by a bogie according to claim 1.

The bogie includes a framework and a magnet track braking device. The framework includes a frame structure enclosed by two cross beams and two side beams, lower end faces of two side ends of each of the two cross beams are respectively fixedly provided with limiting seats, and the limiting seat includes a blocking part and a positioning part; the blocking part is configured to abut against and cooperate with an abutting part arranged on the magnet track braking device, and a blocking direction of the blocking part arranged on one of the two cross beams is opposite to a blocking direction of the blocking part arranged on the other of the two cross beams; the positioning part is configured to cooperate with a matching part arranged on the magnet track braking device, and the magnet track braking device is caused to move relative to the framework along a height direction. The limiting seat is further provided with a connection part, the blocking part and the positioning part are fixed to the connection part, the connection part is provided with an arc-shaped connection surface that fits with an outer wall of the cross beam, and the arc-shaped connection surface is attached to the outer wall of the cross beam and is fixed to the outer wall of the cross beam by welding. When the magnet track braking device is not working, a drive member of the magnet track braking device is secured to the framework, and at the same time, the limiting seat can limit the magnet track braking device, thereby ensuring the stability of the magnet track braking device and the framework and avoiding shaking. At this point, the lower part of the magnet track braking device does not contact a rail surface, there is no friction between the magnet track braking device and the rail surface, and no braking force is generated. When the magnet track braking device is working, the drive member drives the magnet track braking device to move downward until the lower part of the magnet track braking device contacts the rail surface, and suction is generated between the magnet track braking device and the rail surface. When there is a relative movement between the magnet track braking device and the rail surface, the friction is generated between the two, and the friction is transmitted from the limiting seat to the cross beam of the framework through the action of the abutting part and the blocking part, so as to realize the braking effect.

The positioning part can cooperate with the matching part of the magnet track braking device, so that the magnet track braking device can move in the height direction relative to the framework, and the relative position between the magnet track braking device and the framework can still be guaranteed after many times of movement, so as to avoid the shift of the magnet track braking device.

That is to say, the limiting seat is integrated with the blocking part and the positioning part, the blocking part can act with the abutting part of the magnet track braking device and provide braking force, and the positioning part can ensure that the magnet track braking device can only move in the height direction relative to the framework, so as to position the magnet track braking device. The limiting seat also plays the roles of blocking and positioning, thus simplifying the overall structure of the bogie and making the overall structure compact. Moreover, the limiting seat is fixed to the cross beam. Since the structures of the components below the cross beam is relatively regular, it is convenient for welding and other fixing operations when the limiting seat is arranged below the cross beam. At the same time, when the limiting seat integrated with blocking and positioning functions is fixed to the cross beam, the stress situation can be simplified, and the overall structure can be simplified and the cost can be reduced while meeting the same strength requirements.

Optionally, a limiting step is formed between the positioning part and the blocking part, and the magnet track braking device is configured to move upward along the height direction until the magnet track braking device abuts against a step surface of the limiting step.

Optionally, a wear-resistant part is further arranged between the blocking part and the abutting part.

Optionally, the limiting seat is a forging, an outer wall of the blocking part is further machined with a mounting surface, and the wear-resistant part is fixed to the mounting surface through a fastener.

Optionally, one of the positioning part and the matching part is provided with a positioning shaft, the other of the positioning part and the matching part is provided with a positioning hole fitting with the positioning shaft, an axis of the positioning shaft is arranged along the height direction, and the positioning shaft and the positioning hole is configured to move relatively along the height direction.

Optionally, an end of the positioning shaft is provided with a conical surface, and/or the positioning hole is a conical hole, and a large-diameter section of the conical hole faces a side of the positioning shaft.

Optionally, the framework further includes a hanging seat, the hanging seat includes a rectangular hanging frame, and a side frame of a side of the rectangular hanging frame forms a mounting beam, an end of the mounting beam extends outward and passes through the side beam and is fixed to the side beam, a side frame of a side of the rectangular hanging frame opposite to the mounting beam is provided with a hanging connector, and the hanging connector is configured to fix to a drive member of the magnet track braking device.

Optionally, an upper cover plate of the side beam is provided with an extension section, and the extension section is attached and fixed to an upper end face of the mounting beam.

Optionally, the framework further includes a shaft-disk brake hanging seat fixedly arranged on the cross beam, and the shaft-disk brake hanging seat is fixed to the cross beam by tube-plate welding.

Optionally, a lower end face of the cross beam is further provided with a double traction rod seat.

Optionally, a wheelbase of the framework is less than 2500mm.

Optionally, the drive member is fixed to the framework.

### BRIEF DESCRIPTION OF THE DRAWINGS

Figures 1 and 2 are structural schematic diagrams of a framework of a bogie provided according to an embodiment of the present application;
Figure 3 is a section view of a bogie;
Figure 4 is a partial enlarged view of Figure 3; and
Figure 5 is a structural schematic diagram of a limiting seat.

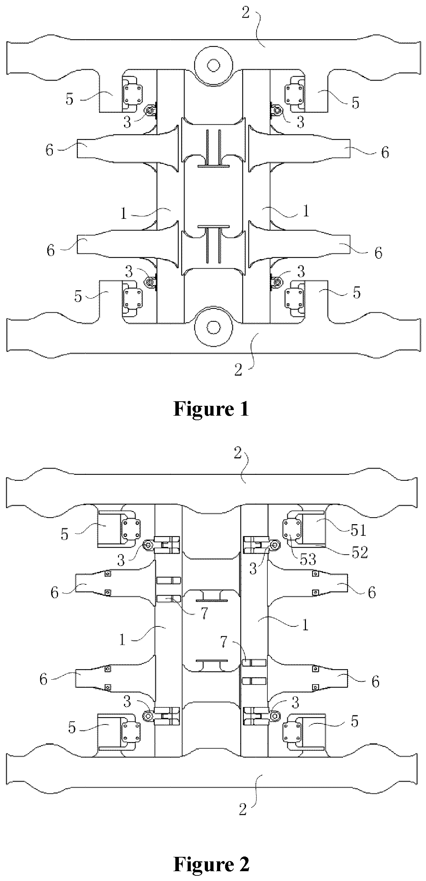

In Figures 1-5, reference signs are explained as follows:
1-cross beam;
2-side beam;
3-limiting seat, 31-blocking part, 311-mounting surface, 32-positioning part, 321-first matching structure, 33-limiting step, 34-wear-resistant part, 35-fastener, 36-connection part, 361-arc-shaped connection surface, 37-reinforcing rib;
4-magnet track braking device, 41-drive member, 42-abutting part, 43-matching part, 431-second matching structure;
5-hanging seat, 51-mounting beam, 52-hanging arm, 53-hanging connector;
6-shaft-disk brake hanging seat; and
7-double traction rod seat.

### DETAILED DESCRIPTION OF EMBODIMENTS

In order to enable those skilled in the art to better understand the technical solutions of the present application, the present application is further described in detail below in conjunction with the accompanying drawings and the embodiments.

A framework of a bogie and the bogie are provided according to the embodiments of the present application. The bogie includes a magnet track braking device 4 and a framework. The magnet track braking device 4 is also provided with a drive member 41, and the drive member 41 is fixed to the frame. Specifically, as shown in Figures 1 and 2, the framework includes a rectangular frame enclosed by two cross beams 1 and two side beams 2, and lower end faces of two side ends of each cross beam 1 are respectively fixedly provided with limiting seats 3. In a particular embodiment, in a case that the number of cross beams 1 is three or four, the two cross beams 1 located at both ends of the framework in the longitudinal direction (along a length direction of the side beam 2) are provided with the limiting seats 3. Moreover, the limiting seats 3 are not strictly arranged at the end of the cross beam 1. Specifically, as shown in Figure 2, the end of the cross beam 1 is fixed to the side beam 2, a limiting seat 3 is arranged on a side of the cross beam 1 near the end, and the specific position is arranged according to the actual situation.

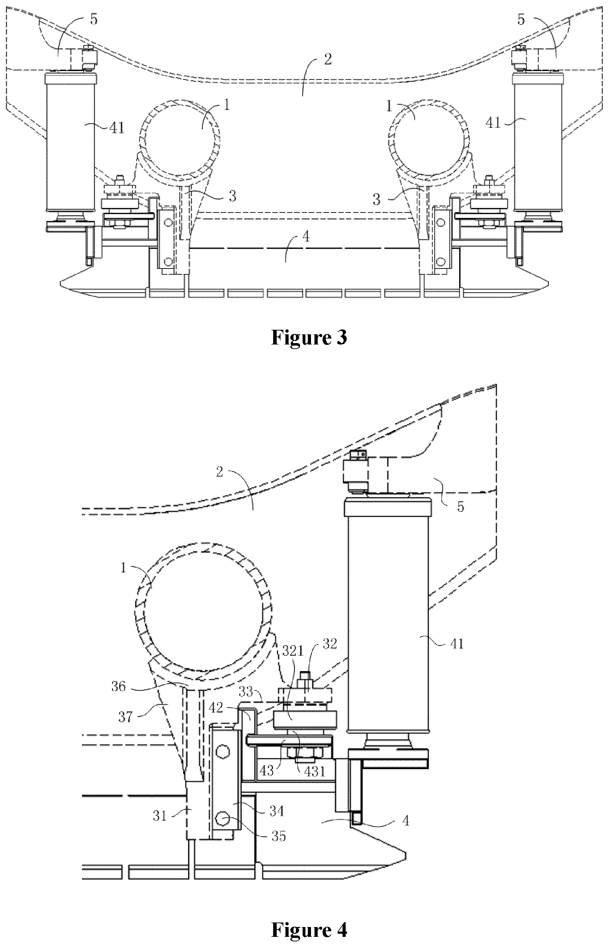

As shown in Figures 3 to 5, the limiting seat 3 includes a blocking part 31 and a positioning part 32. The magnet track braking device 4 is provided with an abutting part 42 and a matching part 43. Specifically, two ends of the magnet track braking device 4 are each provided with the abutting part 42. The blocking part 31 can abut against and cooperate with the abutting part 42. The two cross beams 1 are provided with limiting seats 3, and the blocking direction of the blocking part 31 arranged on one of the two cross beams 1 is opposite to the blocking direction of the blocking part 31 arranged on the other of the two cross beams 1. That is, the blocking parts 31 arranged on the two cross beams 1 can act on the magnet track braking device 4 from two sides in the longitudinal direction to ensure the stability between the magnet track braking device 4 and the framework, and can provide braking force to the magnet track braking device 4.

When the magnet track braking device 4 is not working, the drive member 41 of the magnet track braking device 4 is fixed with the framework, and the limiting seat 3 can limit the magnet track braking device 4 at the same time, thereby ensuring the stability of the magnet track braking device 4 and the framework and avoiding shaking. At this time, the lower part of the magnet track braking device 4 does not contact a rail surface, there is no friction between the magnet track braking device 4 and the rail surface, and no braking force is generated. When the magnet track braking device 4 is working, the drive member 41 drives the magnet track braking device 4 to move downward until the lower part of the magnet track braking device 4 contacts the rail surface, suction is generated between the magnet track braking device 4 and the rail surface. When there is a relative movement between the magnetic track braking device 4 and the rail surface, friction is generated between the magnetic track braking device 4 and the rail surface, the friction is transmitted from the limiting seat 3 to the cross beam 1 of the framework through the action of the abutting part 42 and the blocking part 31, thus realizing the braking effect. Specifically, the drive member 41 may be an air cylinder, a hydraulic cylinder or a combination of a motor and a screw rod, etc., so as to drive the magnet track braking device 4 up and down, which is not specifically limited herein.

The positioning part 32 can cooperate with the matching part 43 of the magnet track braking device 4, so that the magnet track braking device 4 can move relative to the framework in the height direction. The relative position between the magnet track braking device 4 and the framework can still be guaranteed after many times of movements, so as to avoid the shift of the magnet track braking device 4.

That is to say, in the embodiment, the stop seat 3 is integrated with the blocking part 31 and the positioning part 32, the blocking part 31 can act on the abutting part 42 of the magnet track braking device 4 and provide braking force, and the positioning part 32 can ensure that the magnet track braking device 4 can only move relative to the frame in the height direction, so as to position the magnet track braking device 4. The limiting seat 3 also plays the roles of blocking and positioning, thereby simplifying the overall structure of the bogie and making the overall structure compact. Moreover, the limiting seat 3 is fixed to the cross beam 1. Since the structures of the components below the cross beam 1 are relatively regular, the arrangement of the limiting seat 3 below the cross beam 1 facilitates welding and other fixing operations. At the same time, when the limiting seat 3 integrated with blocking and positioning functions is fixed to the cross beam 1, the stress situation can be simplified, and the overall structure can be simplified and the cost can be reduced while meeting the same strength requirements.

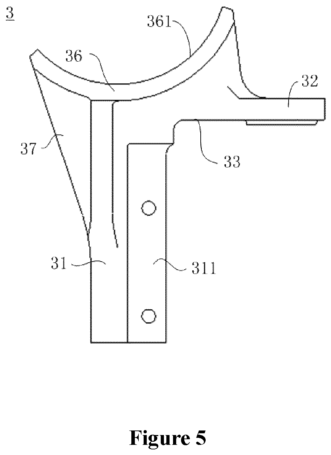

In the embodiment, a limiting step 33 is also formed between the positioning part 32 and the blocking part 31. When braking is not required, the magnet track braking device 4 can move upward along the height direction under the action of the drive member 41 until the magnet track braking device 4 contacts a step surface of the limiting step 33. The limiting step 33 can limit the rise of the magnet track braking device 4 without additional limit structure, which simplifies the overall structure. Specifically, as shown in Figure 5, the blocking part 31 and the positioning part 32 enclose to form an L-shaped structure, the positioning part 32 is arranged at the top of the blocking part 31, and the upper end face in the bend of the L-shaped structure forms the limiting step 33. The structure is relatively simple.

In the embodiment, a wear-resistant part 34 is also arranged between the blocking part 31 and the abutting part 42. Friction is generated between the abutting part 42 and the blocking part 31 during the movement of the magnet track braking device 4 along the height direction under the action of the drive member 41. When the magnet track braking device 4 is working, the abutting part 42 abuts against the blocking part 31 and a force is generated. Therefore, when the wear-resistant part 34 is arranged between the blocking part 31 and the abutting part 42, the action between the blocking part 31 and the abutting part 42 can be ensured, rigid collision and friction between the blocking part 31 and the abutting part 42 can be avoided. Noise generation is also avoided and service life is improved while wear is reduced. Specifically, there are no requirements for the material of the wear-resistant part 34, for example, the wear-resistant part 34 may be a nylon block or the like.

Further, the limiting seat 3 is a forging to ensure structural strength, and the outer wall of the blocking part 31 is also machined with a mounting surface 311. The wear-resistant part 34 is fixed to the mounting surface 311 through a fastener 35. The arrangement of the mounting surface 311 can ensure the stable installation of the wear-resistant part 34, and can also ensure surface contact between the blocking part 31 and the abutting part 42, so as to avoid abrasion of the abutting part 42 due to uneven force caused by the uneven surface of the blocking part 31, and to facilitate the installation operation at the same time. Alternatively, in the embodiment, the wear-resistant part 34 may be fixedly arranged on the abutting part 42, which is not specifically limited herein.

In the embodiment, as shown in Figure 5, the limiting seat 3 is further provided with a connection part 36, and the blocking part 31 and the positioning part 32 are fixed to the connection part 36. The outer wall of the cross beam 1 is a cylindrical structure, and the connection part 36 is provided with an arc-shaped connection surface 361 fitting with the outer wall of the cross beam 1. The arc-shaped connection surface 361 can be attached to the outer wall of the cross beam 1 and is fixed to the outer wall of the cross beam 1 by welding. Such arrangement can increase the connection area between the limiting seat 3 and the cross beam 1, and the limiting seat 3 and the cross beam 1 are fixed by welding. The arrangement of the arc-shaped connection surface 1 can enhance the strength of the welding connection, avoid damage to the welding seam due to high stress during the braking process, and ensure the connection strength and the stability of the connection between the limiting seat 3 and the cross beam 1. Specifically, as shown in Figure 5, a reinforcing rib 37 is arranged between the connection part 36 and the blocking part 31 to ensure the strength of the overall structure of the limiting seat 3 and meet the requirement for braking force.

In the embodiment, one of the positioning part 32 and the matching part 43 is provided with a positioning shaft, and the other of the positioning part 32 and the matching part 43 is provided with a positioning hole. The positioning shaft fits with the positioning hole, and the positioning shaft can move relative to the positioning hole along the axis of the positioning shaft (the height direction). Specifically, the positioning part 32 may be provided with the positioning hole and the matching part 43 may be provided with the positioning shaft, or the positioning part 32 may be provided with the positioning shaft and the matching part 43 may be provided with the positioning hole. Alternatively, the positioning part 32 and the matching part 43 may be sleeves that are nested one another, which are not specifically limited here.

Taking the positioning part 32 with the positioning hole and the matching part 43 with the positioning shaft as an example, the positioning part 32 may be machined to directly form the positioning hole, or as shown in Figure 4, a first matching structure 321 provided with the positioning hole may be fixed to the positioning part 32 through bolt connection or welding and so on. Similarly, the matching part 43 may be machined to directly form the positioning shaft, or as shown in Figure 4, a second matching structure 431 provided with the positioning shaft may be fixed to the matching part 43 through bolt connection or welding and so on.

Furthermore, the end of the positioning shaft is a conical surface, and/or the positioning hole is a conical hole, and a large-diameter section of the conical hole faces a side of the positioning shaft. That is to say, at least one of the ends of the positioning shaft and the positioning hole is provided with a guide structure, and the guide structure is a conical surface to ensure a stable fit between the positioning shaft and the positioning hole. Specifically, during the braking process, the positioning shaft and the positioning hole are in a disengaged state. Due to reasons such as vibration, the relative position between the positioning hole and the positioning shaft is easy to shift. The arrangement of the guide structure can ensure that the positioning shaft can be re-matched with the positioning hole when the magnet track braking device 4 is driven up by the drive member 41 to ensure a stable position.

In the embodiment, the framework further includes a hanging seat 5, and the hanging seat 5 is arranged on the side beam 2 and is used for installing the magnet track braking device 4. When the magnet track braking device 4 is not working, the magnet track braking device 4 is fixed through the hanging seat 5 and the limiting seat 3 to ensure that the magnet track braking device 4 and the framework are stable and avoid shaking. Specifically, as shown in Figure 2, the hanging bracket 5 includes a rectangular hanging frame, and a side frame of a side of the rectangular hanging frame forms a mounting beam 51. An end of the mounting beam 51 extends outward along the axis direction of the mounting beam 51 and passes through the side beam 2 and is fixed to the side beam 2 by welding. A side frame of a side of the rectangular hanging frame opposite to the mounting beam 51 is provided with a hanging connector 53, and the hanging connector 53 is configured to fix to the drive member 41 of the magnet track braking device 4. That is to say, the rectangular hanging frame is equivalent to that including the mounting beam 51 and a hanging arm 52 of a U-shaped structure. An end of the mounting beam 51 passes through the side beam 2 and is fixed to the side beam 2. Two side walls of an opening end of the U-shaped structure are fixed to the mounting beam 51 by welding, a bottom wall of the U-shaped structure is provided with the hanging connector 53, and the hanging connector 53 is configured to fix to the drive member 41 of the magnet track braking device 4.

The specific structure and arranging position of the hanging structure for hanging the magnet track braking device 4 are not limited in the embodiment. For example, the hanging structure may be a hanging beam fixed to the side beam 2, and an end of the mounting beam 51 passes through the side beam 2 and is fixed to the side beam 2 by welding. Such arrangement can simplify the overall structure and make the overall structure more regular. Meanwhile, the rectangular frame structure can ensure the strength of the structure, simplify the overall structure and achieve lightweight. In addition, the hanging seat 5 is a forging, which ensures high structural strength of the hanging seat 5.

Further, an upper end face of the side beam 2 is provided with an upper cover plate. The upper cover plate is provided with an extension section toward the side, and the extension section can be attached and fixed to an upper end face of the mounting beam 51 to further enhance the stability of the connection between the mounting beam 51 and the side beam 2 and ensure the structural strength of the hanging seat 5.

In the embodiment, the framework further includes a shaft-disk brake hanging seat 6 fixedly arranged on the cross beam 1, and the shaft-disk brake hanging seat 6 is fixed to the cross beam 1 by tube-plate welding. That is to say, the bogie is braked through the magnet track braking device 4 and a shaft-disk brake device at the same time, to ensure the braking effect. The shaft-disk brake hanging seat 6 is fixedly arranged on the cross beam 1, so that the installation of the shaft-disk brake device can avoid the magnet track braking device 4, thus realizing the compatibility of the two braking modes.

In the embodiment, a lower end face of the cross beam 1 is further provided with a double traction rod seat 7. The double traction rod seats 7 of the two cross beams 1 are arranged symmetrically with respect to the center of the framework, which can realize overall lifting of the bogie, and the traction force and the braking force are transmitted through two double traction rod seats, which increases the reliability and can give space for a motor hanging seat.

In addition, in the embodiment, a wheelbase of the framework is less than 2500mm, which can meet the requirement of passing through a small curve radius.

The above are only the preferred embodiments of the present application. It should be pointed out that, some improvements and modifications may be made without departing from the principles of the present invention for those skilled in the art, and the improvements and modifications should also be regarded as the protection scope of the present invention, as long as they fall within the scope of the appended claims

## Claims

1. A bogie comprising a framework and a magnet track braking device (4), the framework comprising a frame structure enclosed by two cross beams (1) and two side beams (2), lower end faces of two side ends of each of the two cross beams (1) are respectively fixedly provided with limiting seats (3), and each limiting seat (3) comprises a blocking part (31) and a positioning part (32);
the blocking part (31) is configured to abut against and match an abutting part (42) arranged on the magnet track braking device (4), and a blocking direction of the blocking part (31) arranged on one of the two cross beams (1) is opposite to a blocking direction of the blocking part (31) arranged on the other of the two cross beams (1);
the positioning part (32) is configured to cooperate with a matching part (43) arranged on the magnet track braking device (4), so as to allow the magnet track braking device (4) to move relative to the framework along a height direction,
wherein the limiting seat (3) is further provided with a connection part (36), the blocking part (31) and the positioning part (32) are fixed to the connection part (36), the connection part (36) is provided with an arc-shaped connection surface (361) that fits with an outer wall of the cross beam (1), and the arc-shaped connection surface (361) is attached to the outer wall of the cross beam (1) and is fixed to the outer wall of the cross beam (1) by welding.

2. The bogie according to claim 1, wherein a limiting step (33) is formed between the positioning part (32) and the blocking part (31), and the magnet track braking device (4) is configured to move upward along the height direction until the magnet track braking device (4) abuts against a step surface of the limiting step (33).

3. The bogie according to claim 1, wherein a wear-resistant part (34) is further arranged between the blocking part (31) and the abutting part (42).

4. The bogie according to claim 3, wherein the limiting seat (3) is a forging, an outer wall of the blocking part (31) is further machined with a mounting surface (311), and the wear-resistant part (34) is fixed to the mounting surface (311) through a fastener (35).

5. The bogie according to any one of claims 1 to 4, wherein one of the positioning part (32) and the matching part (43) is provided with a positioning shaft, the other of the positioning part (32) and the matching part (43) is provided with a positioning hole fitting with the positioning shaft, an axis of the positioning shaft is arranged along the height direction, and the positioning shaft and the positioning hole is configured to move relatively along the height direction.

6. The bogie according to claim 5, wherein an end of the positioning shaft is provided with a conical surface, and/or, the positioning hole is a conical hole, and a large-diameter section of the conical hole faces a side of the positioning shaft.

7. The bogie according to any one of claims 1 to 4, the framework further comprising a hanging seat (5), wherein the hanging seat (5) comprises a rectangular hanging frame, and a side frame of a side of the rectangular hanging frame forms a mounting beam (51), an end of the mounting beam (51) extends outward and passes through the side beam (2) and is fixed to the side beam (2), a side frame of a side of the rectangular hanging frame opposite to the mounting beam (51) is provided with a hanging connector (53), and the hanging connector (53) is configured to fix to a drive member (41) of the magnet track braking device (4).

8. The bogie according to claim 7, wherein an upper cover plate of the side beam (2) is provided with an extension section, and the extension section is attached and fixed to an upper end face of the mounting beam (51).

9. The bogie according to any one of claims 1 to 4, the framework further comprising a shaft-disk brake hanging seat (6) fixedly arranged on the cross beam (1), wherein the shaft-disk brake hanging seat (6) is fixed to the cross beam (1) by tube-plate welding.

10. The bogie according to any one of claims 1 to 4, wherein a lower end face of the cross beam (1) is further provided with a double traction rod seat (7).

11. The bogie according to any one of claims 1 to 4, wherein a wheelbase of the framework is less than 2500mm.

12. The bogie according to claim 7, wherein the drive member (41) is fixed to the framework.

## Patentansprüche

1. Drehgestell mit einem Rahmen und einer Magnetschienenbremsvorrichtung (4), wobei der Rahmen einen Rahmenaufbau umfasst, die von zwei Querträgern (1) und zwei Seitenholmen (2) umschlossen ist, untere Stirnflächen zweier Seitenenden jedes der beiden Querträger (1) jeweils fest mit Begrenzungsaufnahmen (3) versehen sind und jede Begrenzungsaufnahme (3) einen Blockierteil (31) und einen Positionierteil (32) umfasst,
der Blockierteil (31) so eingerichtet ist, dass er an einem an der Magnetschienenbremsvorrichtung (4) angeordneten Anlageteil (42) anliegt und darauf abgestimmt ist, und eine Blockierrichtung des an einem der beiden Querträger (1) angeordneten Blockierteils (31) zu einer Blockierrichtung des am anderen der beiden Querträger (1) angeordneten Blockierteils (31) entgegengesetzt ist,
der Positionierteil (32) so eingerichtet ist, dass er mit einem an der Magnetschienenbremsvorrichtung (4) angeordneten Gegenstück (43) so zusammenwirkt, dass sich die Magnetschienenbremsvorrichtung (4) längs einer Höhenrichtung relativ zum Rahmen bewegen kann,
wobei die Begrenzungsaufnahme (3) ferner mit einem Verbindungsteil (36) versehen ist, der Blockierteil (31) und der Positionierteil (32) an dem Verbindungsteil (36) befestigt sind, der Verbindungsteil (36) mit einer bogenförmigen Verbindungsfläche (361) versehen ist, die zu einer Außenwand des Querträgers (1) passt, und die bogenförmige Verbindungsfläche (361) an der Außenwand des Querträgers (1) angebracht und durch Schweißen an der Außenwand des Querträgers (1) befestigt ist.

2. Drehgestell nach Anspruch 1, bei dem zwischen dem Positionierteil (32) und dem Blockierteil (31) eine Begrenzungsstufe (33) gebildet ist und die Magnetschienenbremsvorrichtung (4) so eingerichtet ist, dass sie sich längs der Höhenrichtung nach oben bewegt, bis die Magnetschienenbremsvorrichtung (4) an einer Stufenfläche der Begrenzungsstufe (33) anstößt.

3. Drehgestell nach Anspruch 1, bei dem zwischen dem Blockierteil (31) und dem Anlageteil (42) ferner ein verschleißfestes Teil (34) angeordnet ist.

4. Drehgestell nach Anspruch 3, bei dem die Begrenzungsaufnahme (3) ein Schmiedestück ist, eine Außenwand des Blockierteils (31) ferner mit einer Montagefläche (311) maschinell bearbeitet ist und das verschleißfeste Teil (34) über ein Befestigungselement (35) an der Montagefläche (311) befestigt ist.

5. Drehgestell nach einem der Ansprüche 1 bis 4, bei dem der Positionierteil (32) oder das Gegenstück (43) mit einem Positionierschaft versehen ist, das jeweils andere Teil, also das Gegenstück (43) oder der Positionierteil (32), mit einer zu dem Positionierschaft passenden Positionierbohrung versehen ist, eine Achse des Positionierschafts längs der Höhenrichtung angeordnet ist und der Positionierschaft und die Positionierbohrung so eingerichtet sind, dass sie sich längs der Höhenrichtung relativ zueinander bewegen.

6. Drehgestell nach Anspruch 5, bei dem ein Ende des Positionierschafts mit einer Kegelfläche versehen ist und/oder die Positionierbohrung eine kegelige Bohrung ist und ein Abschnitt der kegeligen Bohrung mit großem Durchmesser einer Seite des Positionierschafts zugewandt ist.

7. Drehgestell nach einem der Ansprüche 1 bis 4, bei dem der Rahmen ferner eine Hängeaufnahme (5) umfasst, wobei die Hängeaufnahme (5) einen rechteckigen Hängerahmen umfasst und ein Seitenrahmen einer Seite des rechteckigen Hängerahmens einen Montageträger (51) bildet, ein Ende des Montageträgers (51) sich nach außen erstreckt und durch den Seitenholm (2) verläuft und am Seitenholm (2) befestigt ist, ein seitlicher Rahmen einer Seite des rechteckigen Hängerahmens, der zum Montageträger (51) entgegengesetzt ist, mit einem Hängeverbinder (53) versehen ist und der Hängeverbinder (53) so eingerichtet ist, dass er an einem Antriebselement (41) der Magnetschienenbremsvorrichtung (4) befestigt ist.

8. Drehgestell nach Anspruch 7, bei dem eine obere Abdeckplatte des Seitenholms (2) mit einem Verlängerungsabschnitt versehen ist und der Verlängerungsabschnitt an einer oberen Stirnfläche des Montageträgers (51) angebracht und befestigt ist.

9. Drehgestell nach einem der Ansprüche 1 bis 4, wobei der Rahmen ferner eine Wellenscheibenbremsenhängeaufnahme (6) umfasst, die fest am Querträger (1) angeordnet ist, wobei die Wellenscheibenbremsenhängeaufnahme (6) durch Rohrplattenschweißen am Querträger (1) befestigt ist.

10. Drehgestell nach einem der Ansprüche 1 bis 4, bei dem eine untere Stirnfläche des Querträgers (1) ferner mit einer Doppeltraktionsstangenaufnahme (7) versehen ist.

11. Drehgestell nach einem der Ansprüche 1 bis 4, bei dem ein Achsstand des Rahmens weniger als 2500 mm beträgt.

12. Drehgestell nach Anspruch 7, bei dem das Antriebselement (41) am Rahmen befestigt ist.

## Revendications

1. Bogie comprenant un bâti et un dispositif de freinage à rail magnétique (4), le bâti comprenant une structure de cadre entourée par deux barres transversales (1) et deux barres latérales (2), des faces d'extrémité inférieures de deux extrémités latérales de chacune des deux barres transversales (1) étant respectivement pourvues de manière fixe de sièges de limitation (3), et chaque siège de limitation (3) comprenant une partie de blocage (31) et une partie de positionnement (32) ;
la partie de blocage (31) étant réalisée de manière à être en butée contre une partie de butée (42) agencée sur le dispositif de freinage à rail magnétique (4) et à être adaptée à celle-ci, et un sens de blocage de la partie de blocage (31) agencée sur l'une des deux barres transversales (1) étant opposé à un sens de blocage de la partie de blocage (31) agencée sur l'autre des deux barres transversales (1) ;
la partie de positionnement (32) étant réalisée de manière à coopérer avec une contrepartie (43) agencée sur le dispositif de freinage à rail magnétique (4), de manière à permettre au dispositif de freinage à rail magnétique (4) de se déplacer par rapport au bâti dans un sens de la hauteur,
dans lequel le siège de limitation (3) est en outre pourvu d'une partie de raccordement (36), la partie de blocage (31) et la partie de positionnement (32) sont fixées à la partie de raccordement (36), la partie de raccordement (36) est pourvue d'une surface de raccordement en forme d'arc (361) qui s'accorde avec à une paroi extérieure de la barre transversale (1), et la surface de raccordement en forme d'arc (361) est reliée à la paroi extérieure de la barre transversale (1) et fixée à la paroi extérieure de la barre transversale (1) par soudage.

2. Bogie selon la revendication 1, dans lequel un gradin de limitation (33) est formé entre la partie de positionnement (32) et la partie de blocage (31), et le dispositif de freinage à rail magnétique (4) est réalisé de manière à se déplacer vers le haut dans le sens de la hauteur jusqu'à ce que le dispositif de freinage à rail magnétique (4) bute contre une surface de gradin du gradin de limitation (33).

3. Bogie selon la revendication 1, dans lequel une partie résistante à l'usure (34) est en outre agencée entre la partie de blocage (31) et la partie de butée (42).

4. Bogie selon la revendication 3, dans lequel le siège de limitation (3) est une pièce forgée, une paroi extérieure de la partie de blocage (31) est en outre usinée avec une surface de montage (311), et la partie résistante à l'usure (34) est fixée à la surface de montage (311) par l'intermédiaire d'un moyen de fixation (35).

5. Bogie selon l'une des revendications 1 à 4, dans lequel la partie de positionnement (32) ou la contrepartie (43) est pourvue d'une tige de positionnement, l'autre partie parmi la partie de positionnement (32) et la contrepartie (43) est pourvue d'un trou de positionnement s'adaptant à la tige de positionnement, un axe de la tige de positionnement est agencé dans le sens de la hauteur, et la tige de positionnement et le trou de positionnement sont réalisés de manière à se déplacer l'une par rapport à l'autre dans le sens de la hauteur.

6. Bogie selon la revendication 5, dans lequel une extrémité de la tige de positionnement est pourvue d'une surface conique, et/ou le trou de positionnement est un trou conique, et une section de grand diamètre du trou conique fait face à un côté de la tige de positionnement.

7. Bogie selon l'une des revendications 1 à 4, le bâti comprenant en outre un siège suspendu (5), dans lequel le siège suspendu (5) comprend un cadre suspendu rectangulaire, et un cadre latéral d'un côté du cadre suspendu rectangulaire forme une barre de montage (51), une extrémité de la barre de montage (51) s'étend vers l'extérieur et passe à travers la barre latérale (2) et est fixée à la barre latérale (2), un cadre latéral d'un côté du cadre suspendu rectangulaire opposé à la barre de montage (51) est pourvu d'un connecteur suspendu (53), et le connecteur suspendu (53) est réalisé de manière à être fixé à un élément d'entraînement (41) du dispositif de freinage à rail magnétique (4).

8. Bogie selon la revendication 7, dans lequel une plaque de recouvrement supérieure de la barre latérale (2) est pourvue d'un tronçon d'extension, et le tronçon d'extension est relié et fixé à une face d'extrémité supérieure de la barre de montage (51).

9. Bogie selon l'une des revendications 1 à 4, le bâti comprenant en outre un siège suspendu (6) de frein à disque et arbre agencé de manière fixe sur la barre transversale (1), dans lequel le siège suspendu de frein à disque et arbre (6) est fixé à la barre transversale (1) par soudage tube-plaque.

10. Bogie selon l'une des revendications 1 à 4, dans lequel une face d'extrémité inférieure de la barre transversale (1) est en outre pourvue d'un siège de double tige de traction (7).

11. Bogie selon l'une des revendications 1 à 4, dans lequel un empattement du bâti est inférieur à 2500 mm.

12. Bogie selon la revendication 7, dans lequel l'élément d'entraînement (41) est fixé au bâti.
